# FASCICULE DE BREVET EUROPEEN

(11) **EP 2 401 495 B1**
(45) Date de publication et mention de la délivrance du brevet: **13.11.2013**
(21) Numéro de dépôt: 10708254.7
(22) Date de dépôt: 01.02.2010
(51) Int. Cl.: F02N 11/08, F01P 3/12

(54) **PROCEDE DE GESTION DE L'ARRET AUTOMATIQUE DU MOTEUR D'UN VEHICULE AUTOMOBILE**
VERFAHREN ZUR VERWALTUNG DES AUTOMATISCHEN ANHALTENS EINES KRAFTFAHRZEUGS
METHOD FOR MANAGING THE AUTOMATIC STOPPAGE OF AN AUTOMOBILE

(30) Priorité: 24.02.2009 FR 0900829
(43) Date de publication de la demande: 04.01.2012
(73) Titulaire: Renault S.A.S., 92100 Boulogne-Billancourt (FR)
(72) Inventeur: GAMBERONI, Clément, F-75003 Paris (FR); BLOND, Christophe, F-28800 Bonneval (FR)
(86) Numéro de dépôt international: PCT/FR2010/050153
(87) Numéro de publication internationale: WO 2010/097530

(56) Documents cités:
- DE-A1- 10 347 683
- GB-A- 2 337 831
- US-A1- 2005 262 827

## Description

### Domaine technique auquel se rapporte l'invention

La présente invention concerne un procédé de gestion de l'arrêt automatique du moteur d'un véhicule automobile et un procédé d'arrêt automatique d'un tel moteur géré par ce procédé de gestion.

### ARRIERE-PLAN TECHNOLOGIQUE

Les moteurs dits « hybrides » comportent un moteur à combustion interne et une partie électrique qui comprend au moins un démarreur électrique.

Dans le moteur à combustion interne suralimentée, l'air frais est introduit dans un conduit d'admission et est comprimé par un compresseur d'un turbocompresseur, avant d'être acheminé vers un répartiteur d'admission relié à une chambre de combustion d'un cylindre moteur par l'intermédiaire d'une soupape d'admission.

Après la combustion, les gaz résiduels d'échappement sont expulsés vers un conduit d'échappement à travers une soupape d'échappement et entraînent une turbine entraînante dudit turbocompresseur placée dans ce conduit d'échappement.

Le moteur à combustion interne produit des gaz d'échappement polluants, comprenant notamment du monoxyde de carbone, des hydrocarbures imbrûlés, des particules et des molécules d'oxydes d'azote.

Dans les moteurs « hybrides », il est prévu, afin de limiter ces émissions polluantes, d'arrêter le moteur à combustion interne lorsque le régime du moteur est inférieur à un seuil prédéterminé, puis de le remettre en route grâce au démarreur électrique.

Ainsi, le moteur à combustion interne s'arrête de façon automatique, sans intervention du conducteur, par exemple lorsque le véhicule est arrêté à un feu rouge.

Les émissions de gaz d'échappement polluants sont ainsi limitées.

On connaît du document D1 (DE 103 47 683) un procédé de gestion de l'arrêt automatique d'un moteur de véhicule automobile. Dans ce document D1, on interdit l'arrêt automatique du moteur si la température de l'alternateur est supérieure à un seuil. En revanche, si la température de l'alternateur est inférieure à ce seuil, l'arrêt automatique du moteur est autorisé.

Cependant, lorsque le moteur à combustion interne est ainsi arrêté, la circulation d'huile de ce moteur est également arrêtée et le carter central du turbocompresseur n'est plus refroidi par cette circulation d'huile. Si l'arrêt automatique du moteur est déclenché alors que la température des gaz d'échappement circulant dans la turbine du turbocompresseur est très élevée, ceux-ci peuvent entraîner une montée en température du carter central du turbocompresseur néfaste pour le fonctionnement de celui-ci.

En particulier, la cokéfaction de l'huile présente dans ce carter central à haute température produit un résidu solide qui peut bloquer la rotation de l'axe du turbocompresseur. Le dépassement des limites thermiques de résistance des matériaux peut également nuire au fonctionnement de ce turbocompresseur.

Afin de limiter l'augmentation de la température du turbocompresseur liée aux arrêts automatiques du moteur à combustion interne, il est connu d'utiliser une pompe à eau additionnelle, alimentée par la partie électrique du moteur, pour refroidir ce turbocompresseur lorsque le moteur à combustion interne est arrêté. Cependant, l'installation d'une telle pompe est coûteuse et son utilisation induit une consommation énergétique accrue.

### OBJET DE L'INVENTION

Le but de la présente invention est de limiter l'augmentation de la température du turbocompresseur liée à l'arrêt de la circulation d'huile lors des arrêts automatiques de ce moteur de façon peu coûteuse et économique en énergie.

A cet effet, la présente invention propose un procédé de gestion de l'arrêt automatique du moteur d'un véhicule automobile, selon la revendication 1.

Ainsi, grâce au procédé selon l'invention, l'arrêt automatique du moteur est empêché si la température en amont du turbocompresseur est supérieure à une valeur seuil. La circulation d'huile pour le refroidissement du moteur à combustion interne ne peut donc pas être arrêtée et l'augmentation de la température interne du carter central est limitée.

D'autres caractéristiques avantageuses et non limitatives du procédé selon l'invention sont définies dans les revendications 2 à 10.

### DESCRIPTION DETAILLEE D'UN EXEMPLE DE REALISATION

La description qui va suivre, en regard des dessins annexés, donnée à titre d'exemple non limitatif, fera bien comprendre en quoi consiste l'invention et comment elle peut être réalisée.

Sur les dessins annexés :
- la figure 1 est une vue schématique des différents organes d'un moteur à combustion interne autorisant la mise en oeuvre du procédé conforme à l'invention ;
- la figure 2 est un diagramme par blocs représentant schématiquement les différentes étapes du procédé de gestion de l'arrêt automatique du moteur conforme à l'invention.

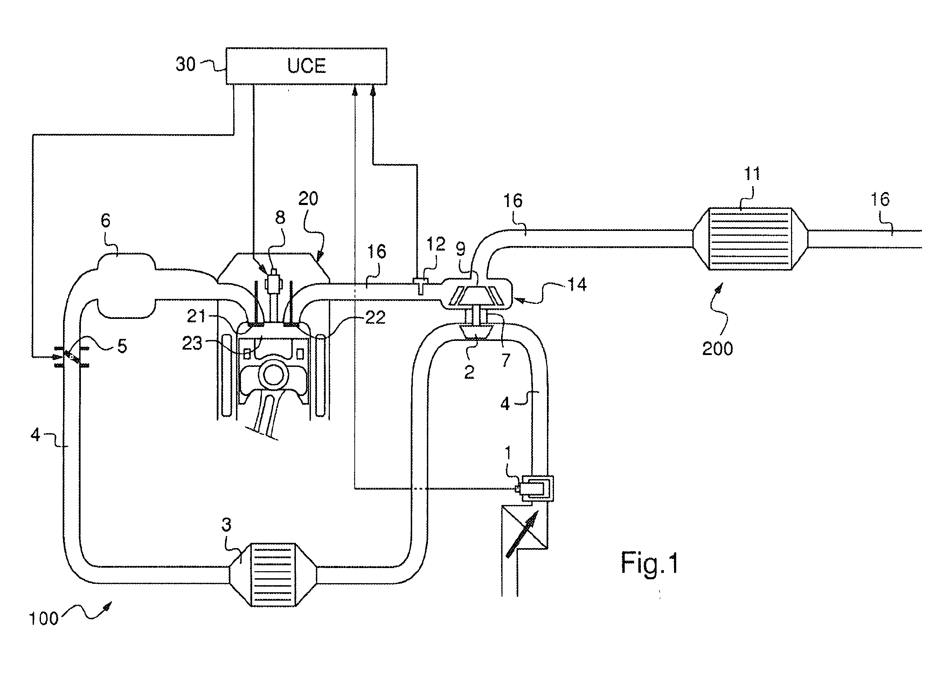

Sur la figure 1, on a représenté un moteur à combustion interne suralimenté comportant une chambre de combustion 23 alimentée en air frais par une ligne d'admission 100 et débouchant en aval sur une ligne d'échappement 200.

Dans la suite de la description, les termes « amont » et « aval » sont définis par rapport au sens d'écoulement des gaz dans la ligne d'admission 100 et d'échappement 200.

La ligne d'admission 100 comporte un conduit d'admission 4 dans lequel circule de l'air frais. Le débit d'air frais est mesuré en entrée du conduit d'admission 4 par un débitmètre d'air 1.

Le moteur à combustion interne comprend un turbocompresseur 14 comportant un compresseur 2 et une turbine entraînante 9. La turbine entraînante 9 est placée dans un conduit d'échappement 16 et entraîne le compresseur 2 placée dans le conduit d'admission 4 afin de comprimer le gaz y circulant.

La turbine entraînante 9 est reliée au compresseur 2 par un axe disposé dans le carter central 7 du turbocompresseur 14.

Le turbocompresseur 14 est refroidi par une circulation d'huile non représentée sur la figure 1.

En variante, le turbocompresseur 14 peut également être refroidi par une circulation d'eau assurée par le fonctionnement d'une pompe à eau additionnelle.

Le conduit d'admission 4 débouche dans un répartiteur 6 d'admission. Il comporte un volet d'admission 5 situé en amont de ce répartiteur 6 dont l'orientation par rapport à l'axe du conduit d'admission 4 contrôle le débit de gaz circulant dans le conduit d'admission 4 entrant dans le répartiteur 6.

Le répartiteur 6 est relié à une soupape d'admission 21 d'un cylindre 20 du moteur. Le gaz circulant dans le conduit d'admission 4 entre via une valve d'admission comportant cette soupape d'admission 21 dans une chambre de combustion 23 du cylindre 20 et il est prévu un injecteur 8 qui injecte le carburant dans cette chambre de combustion 23.

Après la combustion, les gaz résiduels d'échappement sont expulsés vers le conduit d'échappement 16 à travers une valve d'échappement comportant une soupape d'échappement 22.

Les gaz d'échappement circulent dans le conduit d'échappement 16 pour arriver à la turbine entraînante 9 du turbocompresseur 14. Ils traversent ensuite de préférence un système de traitement 11 des gaz d'échappement comportant par exemple un catalyseur d'oxydation placé en amont d'un filtre à particules de la ligne d'échappement 200.

Selon le mode de réalisation représenté sur la figure 1, un capteur de température 12 est placé en amont de la turbine 9 du turbocompresseur 14. Ce capteur mesure de préférence en permanence la température des gaz d'échappement circulant dans le conduit d'échappement 16 à la sortie de la chambre de combustion 23, appelée dans la suite la température avant turbine et notée Tavt.

Cette mesure de la température avant turbine Tavt est transmise à une unité de commande électronique 30 du moteur (UCE). Cette unité électronique de commande 30 reçoit également les informations relevées par de nombreux autres capteurs du moteur, portant par exemple sur le débit d'air à l'entrée du conduit d'admission, sur le régime et la charge du moteur, ou sur la vitesse du véhicule propulsé par ce moteur. Elle commande en particulier le positionnement du volet d'admission 5, la quantité de carburant injectée par l'injecteur 8 et le moment de cette injection.

L'unité de commande électronique 30 du moteur dispose en outre de moyens d'arrêt automatique du moteur, permettant d'arrêter le moteur à combustion interne sans intervention du conducteur, par exemple en interrompant l'injection de carburant dans la chambre de combustion.

De manière remarquable, l'unité de commande électronique est programmée pour mettre en oeuvre le procédé de gestion de l'arrêt automatique du moteur selon l'invention.

Pour cela, l'unité de commande électronique 30 est programmée pour réaliser les étapes suivantes, lorsque le moteur à combustion interne est en marche :
- étape a) : déterminer une valeur représentative de la température des gaz d'échappement circulant dans un conduit d'échappement dudit moteur en amont d'une turbine d'un turbocompresseur placée sur le trajet de ce conduit d'échappement,
- étape b) : comparer cette valeur représentative de la température des gaz d'échappement en amont de la turbine à une valeur seuil prédéterminée.

Selon le mode de réalisation représenté sur la figure 1, pour réaliser l'étape a), l'unité de commande électronique 30 relève la mesure de la température avant turbine Tavt mesurée par le capteur 12.

La valeur seuil prédéterminée de la température avant turbine est notée Tavt_seuil, et est par exemple comprise entre 670 degrés Celsius et 750 degrés Celsius.

Elle est par exemple déterminée à l'étape b) en fonction d'au moins un paramètre de fonctionnement du moteur, par exemple en fonction de la température de l'huile du moteur et/ou de la température de l'eau du moteur.

Si cette température avant turbine Tavt est supérieure à ladite valeur seuil prédéterminée à l'étape b), l'unité de commande électronique 30 réalise ensuite une étape c), en déclenchant l'écoulement d'un premier délai temporel Tempo-in prédéterminé pendant lequel les étapes a) et b) sont répétées.

Si, à l'étape c), pendant l'écoulement du premier délai temporel Tempo-in, l'unité de commande électronique 30 détermine une température avant turbine Tavt inférieure à ladite valeur seuil prédéterminée, on suspend l'écoulement de ce premier délai Tempo-in et on réalise l'étape d) décrite ci-après.

Lorsque le premier délai temporel Tempo-in est écoulé et que la valeur représentative de la température des gaz d'échappement en amont de la turbine est supérieure à ladite valeur seuil prédéterminée, l'unité de commande électronique réalise l'étape e) du procédé en interdisant l'arrêt automatique du moteur. L'unité de commande électronique reprend alors de préférence l'exécution du procédé à l'étape a).

Si la température avant turbine déterminée à l'étape a) est inférieure à ladite valeur seuil prédéterminée à l'étape b), l'unité de commande électronique réalise alors l'étape d) en déclenchant l'écoulement d'un deuxième délai temporel Tempo-out prédéterminé pendant lequel les étapes a) et b) sont répétées.

Si, à l'étape d), pendant l'écoulement du deuxième délai temporel Tempo-out, l'unité de commande électronique détermine une température avant turbine supérieure à ladite valeur seuil prédéterminée, on arrête l'écoulement du deuxième délai temporel Tempo-out, on réinitialise la mesure de l'écoulement de ce deuxième délai temporel Tempo-out et on réalise l'étape c).

Lorsque le deuxième délai temporel est écoulé et que la valeur représentative de la température des gaz d'échappement en amont de la turbine est inférieure à ladite valeur seuil prédéterminée, l'unité de commande réalise l'étape f) du procédé en autorisant l'arrêt automatique du moteur et en réinitialisant la mesure de l'écoulement du premier délai temporel Tempo-in. L'unité de commande électronique reprend alors de préférence l'exécution du procédé à l'étape a).

Le premier délai Tempo-in peut être nul. L'unité de commande électronique 30 effectue alors l'étape e) du procédé et reprend à l'étape a).

Le deuxième délai Tempo-out peut également être nul : l'unité de commande électronique 30 autorise alors immédiatement l'arrêt du moteur, et reprend à l'étape a).

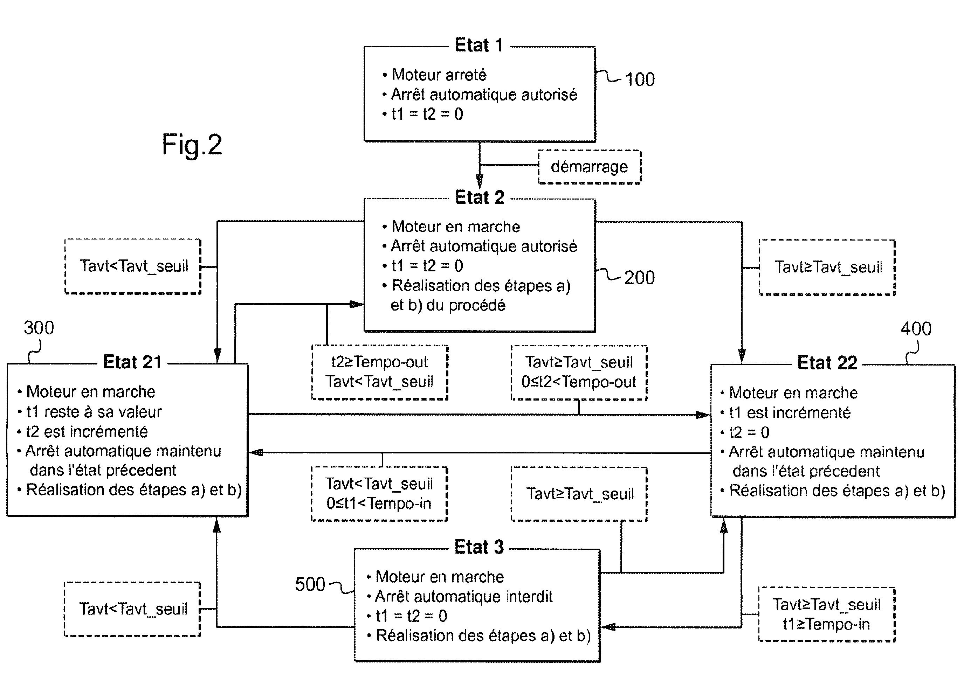

En pratique, un mode de réalisation de ce procédé est représenté sur la figure 2. L'unité de commande électronique 30 mesure l'écoulement de chacun de ces délais par l'incrémentation d'un compteur de temps et indique l'état d'inhibition de l'arrêt automatique du moteur par une variable de sortie notée, sur la figure 2, Arrêt Automatique qui peut prendre deux valeurs « autorisé » ou « interdit ». Un premier compteur de temps t1 est incrémenté entre les valeurs t1 = 0 et t1 = Tempo-in pour mesurer l'écoulement du premier délai Tempo-in et un deuxième compteur de temps t2 est incrémenté entre les valeurs t2 = 0 et t2 = Tempo-out pour mesurer l'écoulement du deuxième délai Tempo-out.

Initialement, lorsque le moteur est à l'arrêt, avant introduction de la clé de contact par le conducteur ou lors d'un arrêt automatique ou volontaire du moteur, l'arrêt automatique est autorisé par défaut et les premier et deuxième compteurs sont initialisés à zéro. Cet état du moteur est noté Etat 1 sur la figure 2 et est représenté dans le cadre 100.

Au démarrage ou redémarrage automatique du moteur, celui-ci passe dans l'état noté Etat 2, représenté dans le cadre 200 de la figure 2, dans lequel le moteur est en marche, l'arrêt automatique est autorisé par défaut et les premier et deuxième compteurs sont initialisés à zéro.

Dès que le moteur est mis en marche, l'unité de commande électronique 30 réalise de préférence en permanence les étapes a) et b) du procédé précitées.

Selon ce mode de réalisation, dans l'étape b), l'unité centrale compare en permanence la température avant turbine Tavt mesurée avec une même valeur seuil notée Tavt_seuil.

Selon le mode de réalisation décrit ici, si la température avant turbine Tavt est supérieure à la valeur seuil Tavt_seuil, l'unité de commande électronique 30 déclenche la réalisation de l'étape c) du procédé : le moteur passe dans l'état 22 représenté dans le cadre 400 de la figure 2, dans lequel le moteur est en marche, le premier compteur t1 est régulièrement incrémenté, et le deuxième compteur t2 est maintenu à zéro.

L'état autorisé ou interdit de l'arrêt automatique du moteur n'est pas modifié en passant à cet état 22 du moteur. Autrement dit, lorsque l'unité de commande électronique fait passer le moteur de l'état 2 à l'état 22, l'arrêt automatique reste autorisé dans l'état 22.

Si, alors que le moteur est dans cet état 22, la température avant turbine Tavt devient inférieure à la valeur seuil Tavt_seuil, l'unité de commande électronique réalise l'étape d) du procédé en faisant passer le moteur dans un état 21 représenté dans le cadre 300 de la figure 2, dans lequel le moteur est en marche, l'incrémentation du premier compteur t1 est suspendu, et le deuxième compteur t2 est incrémenté. Comme précédemment, l'état de la variable Arrêt Automatique n'est pas modifié.

Si, lorsque le moteur est dans l'état 2, la température avant turbine Tavt mesurée est inférieure à la valeur seuil Tavt_seuil, l'unité de commande électronique 30 déclenche la réalisation de l'étape d) du procédé en mettant le moteur dans cet état 21 représenté dans le cadre 300 de la figure 2. Dans ce cas, le premier compteur t1 qui était à zéro dans l'état 2 du moteur est maintenu à zéro, et le deuxième compteur t2 est incrémenté.

L'état autorisé ou interdit de l'arrêt automatique du moteur n'est pas modifié en passant à cet état 21 du moteur. Autrement dit, lorsque l'unité de commande électronique 30 fait passer le moteur de l'état 2 à l'état 21, l'arrêt automatique reste autorisé dans l'état 21.

Si, alors que le moteur est dans l'état 21, la température avant turbine Tavt devient supérieure à la valeur seuil Tavt_seuil, l'unité de commande électronique 30 réalise l'étape c) du procédé en faisant passer le moteur dans l'état 22, et le deuxième compteur est initialisé à zéro, tandis que le premier compteur est incrémenté. Comme précédemment, l'état de la variable Arrêt Automatique n'est pas modifié.

Lorsque le premier compteur t1 atteint sa valeur maximale Tempo-in, le moteur est alors dans l'état 22 et la température avant turbine Tavt est supérieure ou égale à la valeur seuil Tavt_seuil. L'unité de commande électronique 30 fait alors passer le moteur dans l'état 3, représenté dans le cadre 500 de la figure 2, dans lequel le moteur est en marche, le premier compteur t1 et le deuxième compteur t2 sont réinitialisés à zéro et l'état de la variable Arrêt Automatique du moteur indique que celui-ci est interdit, ce qui réalise l'étape e) du procédé.

Lorsque le deuxième compteur t2 atteint sa valeur maximale Tempo-out, le moteur est alors dans l'état 21 et la température avant turbine Tavt est inférieure ou égale à la valeur seuil Tavt_seuil. L'unité de commande électronique 30 fait alors revenir le moteur dans l'état 2, représenté dans le cadre 200 de la figure 2, dans lequel le moteur est en marche, le premier compteur t1 et le deuxième compteur t2 sont réinitialisés à zéro et l'état de la variable Arrêt Automatique du moteur indique que celui-ci est autorisé, ce qui réalise l'étape f) du procédé.

Lorsque le moteur est dans l'état 3, l'unité de commande électronique 30 réalise les étapes a) et b) du procédé et selon la comparaison de la température avant turbine Tavt mesurée et de la valeur seuil Tavt_seuil à l'étape b), l'unité de commande électronique 30 fait de la même façon passer le moteur dans l'un ou l'autre des états 21 et 22 précédemment décrits en réalisant les étapes c) et d) du procédé. L'état de la variable Arrêt Automatique n'étant pas modifié lors du passage de l'état 3 à l'état 21 ou 22, l'arrêt automatique est alors interdit dans les états 21 et 22.

Comme précédemment, si le deuxième compteur t2 est incrémenté jusqu'à sa valeur maximale Tempo-out, l'unité de commande électronique 30 fait passer le moteur dans l'état 2 (étape f)), tandis que si le premier compteur t1 est incrémenté jusqu'à sa valeur maximale Tempo-in, l'unité de commande électronique fait revenir le moteur dans l'état 3 (étape e)).

Les étapes a) et b) de mesure de la température avant turbine Tavt et de comparaison de cette température avec une valeur seuil Tavt_seuil sont de préférence réalisées en permanence par l'unité de commande électronique 30.

En variante, l'unité de commande électronique 30 peut être programmée pour que les étapes a) et b) soient réalisées à des instants prédéterminés en fonction du fonctionnement du moteur, ou à intervalles réguliers.

En variante, l'unité de commande électronique estime, à l'étape a), ladite température avant turbine Tavt à partir des valeurs du régime et de la charge du moteur.

Selon une autre variante, la valeur représentative de la température avant turbine Tavt déterminée par l'unité de commande électronique est une valeur d'intégration de la fonction représentative de cette température en fonction du temps. Pour cela, l'unité de commande électronique reçoit en permanence les valeurs de la température avant turbine mesurées par le capteur 12 et lorsque cette température avant turbine mesurée dépasse une valeur seuil préliminaire, l'unité de commande électronique détermine une valeur d'intégration de la fonction représentative de cette température en fonction du temps, en calculant par exemple l'aire située entre la courbe représentative de la température avant turbine en fonction du temps et la droite pour laquelle la température avant turbine Tavt est égale à ladite valeur seuil préliminaire.

Le procédé de gestion de l'arrêt automatique de moteur de véhicule automobile présente une application particulièrement avantageuse pour la mise en oeuvre d'un procédé d'arrêt automatique de ce moteur comportant selon l'invention les étapes suivantes :
g) on détermine la vitesse dudit véhicule,
h) on compare cette valeur de vitesse déterminée avec une valeur de vitesse seuil,
i) on détermine si l'arrêt automatique du moteur est autorisé ou empêché par la mise en oeuvre du procédé de gestion de l'arrêt automatique du moteur décrit précédemment,
j) si ladite valeur de vitesse déterminée est inférieure à ladite valeur de vitesse seuil et que l'arrêt automatique du moteur est autorisé, on arrête le moteur,
k) si ladite valeur de vitesse déterminée est inférieure à ladite valeur de vitesse seuil et que l'arrêt automatique du moteur est empêché, on reprend les étapes successives de ce procédé à partir de l'étape g),
l) si ladite valeur de vitesse déterminée est supérieure à ladite valeur vitesse seuil, on reprend les étapes successives de ce procédé à partir de l'étape g).

En pratique, l'étape i) peut être réalisée soit à la suite des étapes g) et h), soit en permanence pendant le fonctionnement du moteur.

Si l'étape i) est réalisée en permanence pendant le fonctionnement du moteur, celle-ci est réalisée avant les étapes j), k) et l) du procédé d'arrêt automatique du moteur et l'unité de commande électronique 30 relève directement la valeur courante de la variable « Arrêt Automatique » pour déterminer si l'arrêt automatique est autorisé ou interdit.

Si l'étape i) n'est pas effectuée en permanence pendant le fonctionnement du moteur, l'unité de commande électronique 30 réalise les étapes a) à e) ou f) du procédé de gestion de l'arrêt automatique pour déterminer si l'arrêt automatique est autorisé ou interdit.

Si la valeur de la vitesse du véhicule déterminée à l'étape g) est inférieure à ladite valeur de vitesse seuil et que l'arrêt automatique du moteur est autorisé, l'unité de commande électronique met en oeuvre les moyens d'arrêt automatique du moteur.

Grâce au procédé selon l'invention, lorsque la température des gaz d'échappement circulant dans le conduit d'échappement en amont de la turbine du turbocompresseur est supérieure au seuil de température prédéterminé, l'arrêt automatique du moteur est inhibé. Ainsi, la circulation d'huile refroidissant le turbocompresseur, la montée en température du carter central du turbocompresseur, néfaste pour le fonctionnement de celui-ci, est limitée.

En particulier, la cokéfaction de l'huile présente dans ce carter central à haute température est réduite et les limites thermiques de résistance des matériaux ne sont pas dépassées.

Par ailleurs, lorsque la température avant turbine est inférieure à la valeur seuil de température, l'arrêt automatique du moteur est autorisé, et les émissions polluantes du moteur sont ainsi réduites.

Selon d'autres modes de réalisation du procédé selon l'invention, le moteur ne comporte pas de capteur de température placé en amont de la turbine du turbocompresseur. La température des gaz d'échappement est alors estimée par calcul ou grâce à des abaques à partir par exemple du régime et de la charge du moteur.

Alternativement, on peut notamment prévoir que l'unité de commande électronique 30 compare la température avant turbine Tavt à une valeur seuil qui dépend du sens de variation de cette température avant turbine Tavt. Par exemple, lorsque la température avant turbine Tavt diminue, l'unité de commande électronique 30 compare la température avant turbine à une première valeur seuil Tavt_seuil1, et lorsque la température avant turbine Tavt augmente, l'unité de commande électronique 30 compare la température avant turbine à une deuxième valeur seuil Tavt_seuil2. Les autres étapes du procédé sont inchangées.

On peut également prévoir de relever la valeur seuil Tavt_seuil de la température avant turbine lorsque la température de l'huile de la circulation d'huile de refroidissement du turbocompresseur est inférieure à un seuil donné.

## Revendications

1. Procédé de gestion de l'arrêt automatique du moteur d'un véhicule automobile, selon lequel on effectue les étapes suivantes:
a) on détermine une valeur représentative de la température (Tavt) des gaz d'échappement circulant dans un conduit d'échappement (16) dudit moteur en amont d'une turbine (9) d'un turbocompresseur (14) placée sur le trajet de ce conduit d'échappement (16),
b) on compare cette valeur représentative de la température (Tavt) des gaz d'échappement en amont de la turbine (9) à une valeur seuil prédéterminée (Tavt_seuil),
c) si la valeur représentative de la température (Tavt) des gaz d'échappement en amont de la turbine (9) est supérieure à ladite valeur seuil prédéterminée (Tavt_seuil), on déclenche l'écoulement d'un premier délai temporel (Tempo-in) prédéterminé pendant lequel on répète les étapes a) et b),
si, à l'étape c), pendant l'écoulement du premier délai temporel (Tempo-in), on détermine une valeur représentative de ladite température (Tavt) inférieure à ladite valeur seuil prédéterminée (Tavt_seuil), on suspend l'écoulement de ce premier délai et on réalise l'étape d),
d) si la valeur représentative de la température (Tavt) des gaz d'échappement en amont de la turbine (9) est inférieure à ladite valeur seuil prédéterminée (Tavt_seuil), on déclenche l'écoulement d'un deuxième délai temporel (Tempo-out) prédéterminé pendant lequel on répète les étapes a) et b),
si, à l'étape d), pendant le deuxième délai temporel (Tempo-out), on détermine une valeur représentative de ladite température (Tavt) supérieure à ladite valeur seuil prédéterminée (Tavt_seuil), on arrête l'écoulement du deuxième délai temporel (Tempo-out), on réinitialise la mesure de cet écoulement du deuxième délai temporel (Tempo-out) et on réalise l'étape c),
e) si le premier délai temporel (Tempo-in) est écoulé et que la valeur représentative de la température (Tavt) des gaz d'échappement en amont de la turbine (9) est supérieure à ladite valeur seuil prédéterminée (Tavt_seuil), on interdit l'arrêt automatique du moteur,
f) si le deuxième délai temporel (Tempo-out) est écoulé et que la valeur représentative de la température (Tavt) des gaz d'échappement en amont de la turbine (9) est inférieure à ladite valeur seuil prédéterminée (Tavt_seuil), on autorise l'arrêt automatique du moteur et on réinitialise la mesure de l'écoulement du premier délai temporel (Tempo-in).

2. Procédé selon la revendication 1, selon lequel :
à l'étape c), le premier délai temporel (Tempo-in) étant nul, on effectue directement l'étape e) en interdisant l'arrêt automatique du moteur,
à l'étape d), le deuxième délai temporel (Tempo-out) étant nul, on effectue directement l'étape f) en autorisant l'arrêt automatique du moteur.

3. Procédé selon l'une des revendications précédentes, selon lequel :
à l'étape c), on mesure l'écoulement dudit premier délai temporel (Temp-in) par l'incrémentation d'un premier compteur t1 entre t1 = 0 et t1 = Tempo-in,
à l'étape d), on mesure l'écoulement dudit deuxième délai temporel (Tempo-out) par l'incrémentation d'un deuxième compteur t2 entre t2 = 0 et t2 = Tempo-out.

4. Procédé selon l'une des revendications précédentes, selon lequel :
on réalise les étapes a) et b) en permanence pendant le fonctionnement du moteur.

5. Procédé selon l'une des revendications précédentes, selon lequel à l'étape a), on mesure ladite température (Tavt) des gaz d'échappement en amont de la turbine (9) grâce à un capteur (12) disposé dans le conduit d'échappement (16), en amont de la turbine (9) du turbocompresseur (14).

6. Procédé selon l'une des revendications 1 à 4, selon lequel à l'étape a), on estime ladite température (Tavt) des gaz d'échappement en amont de la turbine (9) à partir des valeurs du régime et de la charge du moteur.

7. Procédé selon l'une des revendications 1 à 4, selon lequel à l'étape a), on détermine une valeur d'intégration de la fonction représentative de cette température (Tavt) des gaz d'échappement en amont de la turbine (9) en fonction du temps.

8. Procédé selon l'une des revendications précédentes, selon lequel à l'étape b), on compare ladite valeur représentative de la température (Tavt) des gaz d'échappement en amont de la turbine (9) à une valeur seuil prédéterminée en fonction du sens de variation de ladite valeur représentative.

9. Procédé selon l'une des revendications précédentes, selon lequel, à l'étape b), on détermine ladite valeur seuil prédéterminée en fonction d'au moins un paramètre de fonctionnement du moteur.

10. Procédé d'arrêt automatique du moteur d'un véhicule automobile selon lequel :
g) on détermine la vitesse de ce véhicule,
h) on compare cette valeur de vitesse déterminée avec une valeur de vitesse seuil,
i) on détermine si l'arrêt automatique du moteur est autorisé ou empêché par la mise en oeuvre du procédé de gestion de l'arrêt automatique du moteur selon l'une des revendications précédentes,
j) si ladite valeur de vitesse déterminée est inférieure à ladite valeur de vitesse seuil et que l'arrêt automatique du moteur est autorisé, on arrête le moteur,
k) si ladite valeur de vitesse déterminée est inférieure à ladite valeur de vitesse seuil et que l'arrêt automatique du moteur est empêché, on reprend les étapes successives de ce procédé à partir de l'étape g),
l) si ladite valeur de vitesse déterminée est supérieure à ladite valeur de vitesse seuil, on reprend les étapes successives de ce procédé à partir de l'étape g).

## Patentansprüche

1. Verfahren zum Steuern des automatischen Stoppens des Motors eines Kraftfahrzeugs, in dem die folgenden Schritte ausgeführt werden:
a) Bestimmen eines Wertes, der die Temperatur (Tavt) der Abgase repräsentiert, die in einer Abgasleitung (16) des Motors stromaufseitig einer Turbine (9) eines Turboladers (14), der im Weg dieser Abgasleitung (16) angeordnet ist, strömen,
b) Vergleichen dieses Wertes, der die Temperatur (Tavt) der Abgase stromaufseitig der Turbine (9) repräsentiert, mit einem vorgegebenen Schwellenwert (Tavt_seuil),
c) falls der Wert, der die Temperatur (Tavt) der Abgase stromaufseitig der Turbine (9) repräsentiert, größer ist als der vorgegebene Schwellenwert (Tavt_seuil), Auslösen des Ablaufens einer vorgegebenen ersten Zeitverzögerung (Tempo-in), während derer die Schritte a) und b) wiederholt werden,
falls im Schritt c) während des Ablaufens der ersten Zeitverzögerung (Tempo-in) ein die Temperatur (Tavt) repräsentierender Wert bestimmt wird, der kleiner als der vorgegebene Schwellenwert (Tavt_seuil) ist, Anhalten des Ablaufens dieser ersten Verzögerung und Ausführen des Schrittes d),
d) falls der Wert, der die Temperatur (Tavt) der Abgase stromaufseitig der Turbine (9) repräsentiert, kleiner ist als der vorgegebene Schwellenwert (Tavt_seuil), Auslösen des Ablaufens einer vorgegebenen zweiten Zeitverzögerung (Tempo-out), während derer die Schritte a) und b) wiederholt werden,
falls im Schritt d) während der zweiten Zeitverzögerung (Tempo-out) ein die Temperatur (Tavt) repräsentierender Wert bestimmt wird, der größer ist als der vorgegebene Schwellenwert (Tavt_seuil), Beenden des Ablaufens der zweiten Zeitverzögerung (Tempo-out), erneutes Initialisieren der Messung dieses Ablaufens der zweiten Zeitverzögerung (Tempo-out) und Ausführen des Schrittes c),
e) falls die erste Zeitverzögerung (Tempo-in) abgelaufen ist und der Wert, der die Temperatur (Tavt) der Abgase stromaufseitig der Turbine (9) repräsentiert, größer ist als der vorgegebene Schwellenwert (Tavt_seuil), Verhindern des automatischen Stoppens des Motors,
f) falls die zweite Zeitverzögerung (Tempo-out) abgelaufen ist und der Wert, der die Temperatur (Tavt) der Abgase stromaufseitig der Turbine (9) repräsentiert, kleiner ist als der vorgegebene Schwellenwert (Tavt_seuil), Zulassen des automatischen Stoppens des Motors und erneutes Initialisieren der Messung dieses Ablaufes der ersten Zeitverzögerung (Tempo-in).

2. Verfahren nach Anspruch 1, wobei:
dann, wenn im Schritt c) die erste Zeitverzögerung (Tempo-in) gleich null ist, der Schritt e) direkt ausgeführt wird und das automatische Stoppen des Motors verhindert wird,
dann, wenn im Schritt d) die zweite Zeitverzögerung (Tempo-out) gleich null ist, der Schritt f) direkt ausgeführt wird und das automatische Stoppen des Motors zugelassen wird.

3. Verfahren nach einem der vorhergehenden Ansprüche, wobei:
im Schritt c) das Ablaufen der ersten Zeitverzögerung (Tempo-in) durch Inkrementieren eines ersten Zählers t1 zwischen t1 = 0 und t1 = Tempo-in gemessen wird,
im Schritt d) das Ablaufen der zweiten Zeitverzögerung (Tempo-out) durch Inkrementieren eines zweiten Zählers t2 zwischen t2 = 0 und t2 = Tempo-out gemessen wird.

4. Verfahren nach einem der vorhergehenden Ansprüche, wobei:
die Schritte a) und b) während des Betriebs des Motors ständig ausgeführt werden.

5. Verfahren nach einem der vorhergehenden Ansprüche, wobei im Schritt a) die Temperatur (Tavt) der Abgase stromaufseitig der Turbine (9) mittels eines Sensors (12) gemessen wird, der in der Abgasleitung (16) stromaufseitig der Turbine (9) des Turboladers (14) angeordnet ist.

6. Verfahren nach einem der Ansprüche 1 bis 4, wobei im Schritt a) die Temperatur (Tavt) der Abgase stromaufseitig der Turbine (9) anhand der Werte der Drehzahl und der Last des Motors geschätzt wird.

7. Verfahren nach einem der Ansprüche 1 bis 4, wobei im Schritt a) ein Integrationswert der Funktion, die diese Temperatur (Tavt) der Abgase stromaufseitig der Turbine (9) repräsentiert, in Abhängigkeit von der Zeit bestimmt wird.

8. Verfahren nach einem der vorhergehenden Ansprüche, wobei im Schritt b) der Wert, der die Temperatur (Tavt) der Abgase stromaufseitig der Turbine (9) repräsentiert, mit einem vorgegebenen Schwellenwert in Abhängigkeit von der Richtung der Veränderung dieses repräsentativen Wertes verglichen wird.

9. Verfahren nach einem der vorhergehenden Ansprüche, wobei im Schritt b) der vorgegebene Schwellenwert in Abhängigkeit von wenigstens einem Betriebsparameter des Motors bestimmt wird.

10. Verfahren zum automatischen Stoppen des Motors eines Kraftfahrzeugs, wobei:
g) die Geschwindigkeit dieses Fahrzeugs bestimmt wird,
h) dieser Wert der bestimmten Geschwindigkeit mit einem Geschwindigkeitsschwellenwert verglichen wird,
i) bestimmt wird, ob das automatische Stoppen des Motors zugelassen oder verhindert wird, indem das Verfahren zum Steuern des automatischen Stoppens des Motors nach einem der vorhergehenden Ansprüche ausgeführt wird,
j) dann, wenn der bestimmte Geschwindigkeitswert kleiner ist als der Geschwindigkeitsschwellenwert und das automatische Stoppen des Motors zugelassen ist, der Motor angehalten wird,
k) dann, wenn der bestimmte Geschwindigkeitswert kleiner ist als der Geschwindigkeitsschwellenwert und das automatische Stoppen des Motors verhindert wird, die aufeinanderfolgenden Schritte dieses Verfahrens ab dem Schritt g) erneut ausgeführt werden,
1) dann, wenn der bestimmte Geschwindigkeitswert größer ist als der Geschwindigkeitsschwellenwert, die aufeinanderfolgenden Schritte dieses Verfahrens ab dem Schritt g) erneut ausgeführt werden.

## Claims

1. Method for managing the automatic stopping of the engine of an automobile, wherein the following steps are carried out:
a) a value representative of the temperature (Tavt) of the exhaust gases circulating in an exhaust duct (16) of said engine upstream of a turbine (9) of a turbocharger (14) placed on the line of this exhaust duct (16) is determined,
b) this value representative of the temperature (Tavt) of the exhaust gases upstream of the turbine (9) is compared with a predetermined threshold value (Tavt_thresh),
c) if the value representative of the temperature (Tavt) of the exhaust gases upstream of the turbine (9) is higher than said predetermined threshold value (Tavt_thresh), the timing-out of a first predetermined time delay (Tempo-in) is initiated during which the steps a) and b) are repeated,
if, in the step c), during the timing-out of the first time delay (Tempo-in), a value representative of said temperature (Tavt) lower than said predetermined threshold value (Tavt_thresh) is determined, the timing-out of this first delay is suspended and the step d) is carried out,
d) if the value representative of the temperature (Tavt) of the exhaust gases upstream of the turbine (9) is lower than said predetermined threshold value (Tavt_thresh), the timing-out of a second predetermined time delay (Tempo-out) is initiated during which the steps a) and b) are repeated,
if, in the step d), during the second time delay (Tempo-out), a value representative of said temperature (Tavt) higher than said predetermined threshold value (Tavt_thresh) is determined, the timing-out of the second time delay (Tempo-out) is stopped, the measurement of this timing-out of the second time delay (Tempo-out) is reset and the step c) is carried out,
e) if the first time delay (Tempo-in) has timed out and the value representative of the temperature (Tavt) of the exhaust gases upstream of the turbine (9) is higher than said predetermined threshold value (Tavt_thresh), the automatic stopping of the engine is prohibited,
f) if the second time delay (Tempo-out) has timed out and the value representative of the temperature (Tavt) of the exhaust gases upstream of the turbine (9) is lower than said predetermined threshold value (Tavt_thresh), the automatic stopping of the engine is allowed and the measurement of the timing-out of the first time delay (Tempo-in) is reset.

2. Method according to Claim 1, wherein:
in the step c), the first time delay (Tempo-in) being zero, the step e) is performed directly by prohibiting the automatic stopping of the engine,
in the step d), the second time delay (Tempo-out) being zero, the step f) is performed directly by allowing the automatic stopping of the engine.

3. Method according to either of the preceding claims, wherein:
in the step c), the timing-out of said first time delay (Tempo-in) is measured by the incrementation of a first counter t1 between t1 = 0 and t1 = Tempo-in,
in the step d), the timing-out of said second time delay (Tempo-out) is measured by the incrementation of a second counter t2 between t2 = 0 and t2 = Tempo-out.

4. Method according to one of the preceding claims, wherein:
the steps a) and b) are carried out continuously while the engine is operating.

5. Method according to one of the preceding claims, wherein, in the step a), said temperature (Tavt) of the exhaust gases upstream of the turbine (9) is measured by virtue of a sensor (12) positioned in the exhaust duct (16), upstream of the turbine (9) of the turbocharger (14).

6. Method according to one of Claims 1 to 4, wherein, in the step a), said temperature (Tavt) of the exhaust gases upstream of the turbine (9) is estimated on the basis of the values of the speed and of the load of the engine.

7. Method according to one of Claims 1 to 4, wherein, in the step a), an integration value of the function representative of this temperature (Tavt) of the exhaust gases upstream of the turbine (9) is determined as a function of time.

8. Method according to one of the preceding claims, wherein, in the step b), said value representative of the temperature (Tavt) of the exhaust gases upstream of the turbine (9) is compared with a predetermined threshold value according to the direction of variation of said representative value.

9. Method according to one of the preceding claims, wherein, in the step b), said predetermined threshold value is determined according to at least one operating parameter of the engine.

10. Method for automatically stopping the engine of an automobile wherein:
g) the speed of this vehicle is determined,
h) this determined speed value is compared with a threshold speed value,
i) a determination is made as to whether the automatic stopping of the engine is allowed or prevented by the implementation of the method for managing the automatic stopping of the engine according to one of the preceding claims,
j) if said determined speed value is lower than said threshold speed value and the automatic stopping of the engine is allowed, the engine is stopped,
k) if said determined speed value is lower than said threshold speed value and the automatic stopping of the engine is prevented, the successive steps of this method are resumed from the step g),
l) if said determined speed value is higher than said threshold speed value, the successive steps of this method are resumed from the step g).
